# EUROPÄISCHE PATENTSCHRIFT

(11) **EP 2 499 102 B1**
(45) Veröffentlichungstag und Bekanntmachung des Hinweises auf die Patenterteilung: **08.07.2015**
(21) Anmeldenummer: 10752815.0
(22) Anmeldetag: 14.09.2010
(51) Int. Cl.: C03B 19/14, C03B 37/014

(54) **VERFAHREN ZUR HERSTELLUNG EINES QUARZGLASZYLINDERS SOWIE TRÄGER ZUR DURCHFÜHRUNG DES VERFAHRENS**
PROCESS FOR PRODUCING A QUARTZ GLASS CYLINDER AND ALSO SUPPORT FOR CARRYING OUT THE PROCESS
PROCÉDÉ DE FABRICATION D'UN CYLINDRE EN VERRE DE QUARTZ AINSI QUE SUPPORT POUR METTRE EN OEUVRE LE PROCÉDÉ

(30) Priorität: 09.11.2009 DE 102009052308
(43) Veröffentlichungstag der Anmeldung: 19.09.2012
(73) Patentinhaber: Heraeus Quarzglas GmbH & Co. KG, 63450 Hanau (DE)
(72) Erfinder: SCHUSTER, Anke, 06116 Halle (DE); SOWA, Rene, 06774 Pouch (DE); TROMMER, Martin, 06749 Bitterfeld-Wolfen (DE); PEPER, Udo, 06110 Halle/Saale (DE)
(74) Vertreter: Staudt, Armin Walter
(86) Internationale Anmeldenummer: PCT/EP2010/063438
(87) Internationale Veröffentlichungsnummer: WO 2011/054574

(56) Entgegenhaltungen:
- WO-A1-2005/097693
- WO-A2-2008/038298
- JP-A- 61 168 544

## Beschreibung

Die vorliegende Erfindung betrifft ein Verfahren zur Herstellung eines Quarzglaszylinders, indem durch Abscheiden von SiO₂-Partikeln auf einer Zylindermantelfläche eines um seine Längsachse rotierenden Trägers, der eine Schicht aus Siliciumcarbid (SiC-Schicht) aufweist, ein poröses Sootrohr hergestellt und das Sootrohr zu dem Quarzglaszylinder gesintert wird.

Weiterhin betrifft die Erfindung einen zur Durchführung des Verfahrens geeigneten Träger, der mindestens im Bereich seiner äußeren Zylindermantelfläche eine Schicht aus Siliciumcarbid (SiC-Schicht) aufweist, die als Stab, Rohr oder Beschichtung eines Stabes oder Rohres ausgebildet ist.

### Stand der Technik

Bei der Herstellung eines rohrförmigen SiO₂-Sootkörpers nach dem "OVD-Verfahren" (Outside Vapour Deposition) wird eine siliziumhaltige Ausgangsverbindung durch Flammenhydrolyse oder Pyrolyse zu feinen SiO₂-Partikeln umgesetzt, die auf einer Zylindermantelfläche eines um seine Längsachse rotierenden Trägers niedergeschlagen werden.

Der so erhaltene rohrförmiger Sootkörper (im Folgenden auch als "Sootrohr" bezeichnet) enthält in der Regel eine große Anzahl an Hydroxylgruppen und wird vor dem Sintern einer Dehydratationsbehandlung unterzogen. Durch Sintern des Sootrohres wird ein Quarzglas-Hohlzylinder erhalten oder wenn die Innenbohrung des Sootrohres beim Sintern kollabiert - ein Vollzylinder aus Quarzglas.

Hohl- und Vollzylinder aus synthetischem Quarzglas dienen als Zwischenprodukte für eine Vielzahl von Bauteilen für die optische und für die chemische Industrie, insbesondere für die Herstellung von Linsen für Projektions- und Belichtungssysteme in der Mikrolithographie und für Vorformen für optische Fasern.

Ein OVD-Verfahren zur Herstellung eines Quarzglaszylinders und ein Träger der eingangs genannten Gattung sind aus der DE 23 13 249 B2 bekannt. Darin wird zur Herstellung eines Rohres aus hydroxylgruppenarmem Quarzglas vorgeschlagen, durch Abscheidung von SiO₂-Partikeln auf einem Träger aus Al₂O₃, Mullit, Bornitrid, SiC, Glas oder Glaskeramik ein SiO₂-Sootrohr herzustellen, und dieses anschließend auf dem Träger in einer Inertgasatmosphäre durch Zonensintern zu verglasen.

Eine besondere Schwierigkeit ergibt sich beim Entfernen des Trägers aus der Innenbohrung vor oder nach dem Sintern des Sootrohres. Das Entfernen eines festsitzenden Trägers kann zu Verletzungen der Innenwandung des Sootrohres führen, oder der Träger muss durch Ausbohren entfernt werden. In jedem Fall ist eine aufwändige Bearbeitung der Innenbohrung erforderlich.

Um das Entfernen des Trägers zu erleichtern sind unterschiedliche Maßnahmen bekannt. Beispielsweise wurden die Verwendung eines konischen Trägers, der Einsatz eines Trägers aus Graphit, eine Vorab-Beschichtung eines Al₂O₃-Trägers mit Graphitpulver (US 4,233,052 A) oder die Vorab-Beschichtung eines Trägers aus Glas oder aus SiC mit BN-Pulver (JP 61168544 A(1985)) vorgeschlagen.

Diese Maßnahmen sind aber mit anderen Nachteilen verbunden. Die Verwendung von Graphit führt zu Veränderungen der Redox-Bedingungen im Reaktionsraum und zu einem Abbrand unter oxidierenden Bedingungen. Eine BN-Beschichtung auf einem Träger kann ebenso wie der Einsatz anderer Trägermaterialien als Quarzglas Verunreinigungen im Quarzglasrohling hinterlassen, die durch Diffusion, Abrasion oder Korrosion in die SiO₂-Sootschicht gelangen. Trägerrohre aus Al₂O₃ haben eine relativ geringe Bruchfestigkeit.

Der Einsatz von Trägern aus Quarzglas könnte Kontaminationen des Sootkörper verhindern; allerdings weisen auch Quarzglas-Träger - ähnlich wie Träger aus Al₂O₃ - nicht die Bruchfestigkeit auf, wie sie insbesondere für die Herstellung großer Sootkörper mit relativ kleinem Innendurchmesser notwendig ist. Außerdem ergibt sich bei Quarzglas-Trägern die oben erörterte Schwierigkeit, dass sie sich wegen des fehlenden Ausdehnungsunterschieds zwischen Sootkörper- und Trägermaterial relativ schlecht entfernen lassen.

Die WO 2005/097693 A1 lehrt ein Verfahren zur Herstellung eines Quarzglasrohres durch Sintern eines in vertikaler Orientierung gehaltenen SiO₂-Sootrohres. Die Halterung des Sootrohres umfasst einen Haltestab und ein den Haltestab umgebendes Hüllrohr aus Graphit, auf welches das Sootrohr beim Sintern aufkollabiert wird. Das Hüllrohr weist eine Oberflächenschicht aus SiC auf, die vorab erzeugt wird, indem die Halterung bei hoher Temperatur einer Passivierungsatmosphäre ausgesetzt wird, die mindestens eine der Substanzen NO, HCl, Cl₂ oder CO enthält.

### Technische Aufgabenstellung

Der Erfindung liegt die Aufgabe zugrunde, ein Verfahren zur Herstellung eines Quarzglaszylinders nach dem OVD-Verfahren unter Einsatz eines Trägers mit hoher Bruchfestigkeit anzugeben, der sich einerseits leicht entfernen lässt und von dem andererseits eine geringe Kontaminationsgefahr für den Sootkörper ausgeht.

Weiterhin liegt der Erfindung die Aufgabe zugrunde, einen für die Durchführung des Verfahrens besonders geeigneten Träger bereit zu stellen, der sich durch eine hohe mechanische Stabilität auszeichnet und der auch die Herstellung großvolumiger und dickwandiger Sootkörper mit kleiner Innenbohrung erlaubt.

Hinsichtlich des Verfahrens wird diese Aufgabe ausgehend von einem Verfahren der eingangs genannten Gattung erfindungsgemäß dadurch gelöst, dass die SiC-Schicht der Zylindermantelfläche vor dem Abscheiden der SiO₂-Partikel bei hoher Temperatur in einer sauerstoffhaltigen Atmosphäre behandelt wird, derart, dass durch Oxidation eine SiO₂-Schutzschicht mit einer Dicke von mindestens 0,1 µm erzeugt wird.

Bei der erfindungsgemäßen Modifikation des gattungsgemäßen Verfahrens wird das Sootrohr auf einem Träger erzeugt, der vollständig oder mindestens im Bereich seiner dem Sootrohr zugewandten Oberfläche aus SiC besteht. Die Oberfläche dieser SiC-Schicht wird vor Beginn des Abscheideprozesses durch Oxidation in SiO₂ umgewandelt, so dass eine dünne Schutzschicht aus SiO₂ mit einer Dicke von mindestens 0,1 µm erhalten wird. Die SiO₂-Schutzschicht ist im Idealfall geschlossen und bedeckt die SiC-Oberfläche vollständig.

Das erfindungsgemäße Verfahren ist insoweit mehrstufig als zunächst die Oberfläche der SiC-Schicht in einer Sauerstoff enthaltenden Atmosphäre bei hoher Temperatur in eine SiO₂-Schutzschicht umgewandelt wird, und es erst danach zu einem Kontakt mit den abgeschiedenen SiO₂-Partikeln kommt.

Die SiO₂-Sootabscheidung erfolgt beim erfindungsgemäßen Verfahren somit auf einer SiO₂-Schutzschicht, die aus arteigenen Material in Bezug auf das SiO₂-Sootmaterial besteht und die einen Eintrag von Verunreinigungen in den Sootkörper während des Abscheidevorgangs verhindert oder vermindert.

Die SiO₂-Schutzschicht entfaltet außerdem eine Schutzwirkung in Bezug auf Abrasion und Korrosion des SiC-Trägermaterials durch die Ofenatmosphäre, wobei besonders vorteilhaft ist, dass auch das durch Abrasion oder Korrosion abgetragene Material arteigen in Bezug auf den SiO₂-Sootkörper ist und somit das Kontaminationsrisiko verringert.

Eine reine, nur wenige Atomlagen dicke SiO₂-Schutzschicht auf der SiC-Schicht genügt jedoch weder der Anforderung an eine wirksame Diffusionsbarriere gegenüber Verunreinigungen aus dem SiC des Trägers noch den Anforderungen hinsichtlich der Schutzwirkung in Bezug auf Abrasion und Korrosion des SiC-Trägermaterials. Die Mindestdicke der SiO₂-Schutzschicht beträgt daher 0,1 µm.

Abgesehen von der SiO₂-Schutzschicht besteht der Träger vollständig oder mindestens teilweise aus SiC. Dieser Werkstoff ist thermisch und mechanisch stabil und auch bei geringen Wandstärken zur Halterung eines schweren, großvolumigen Sootkörpers geeignet.

Der Träger wird nach dem Abkühlen des Sootkörpers entfernt. Die dünne SiO₂-Schutzschicht verbleibt dabei in der Regel vollständig auf dem Träger und erschwert das Entfernen des Trägers im Vergleich zu einem Träger mit einer reinen SiC-Schicht nicht.

Durch Sintern des Sootkörpers wird ein Quarzglaszylinder in Form eines Rohres oder Stabes erhalten. Optional erfolgt vor dem Sintern des Sootkörpers eine Dehydratationsbehandlung in einer halogenhaltigen, insbesondere in einer fluor- oder chlorhaltigen Atmosphäre.

Für die technische Herstellung von SiC sind eine Vielzahl von Methoden bekannt, die in unterschiedlichen Modifikationen und Reinheiten des SiC resultieren. Für einen Einsatz als Träger bei einem OVD-Verfahren gemäß der Erfindung hat es sich besonders bewährt, wenn die SiC-Schicht aus einem mit Silicium infiltrierten Siliciumcarbid (SiSiC) besteht.

Dabei handelt es sich um ein so genanntes "reaktionsgebundenes siliciuminfiltriertes SiC". Dieser Werkstoff ist praktisch porenfrei, was das Entfernen des Trägers erleichtert, und er enthält metallisches Silicium, das relativ leicht - im Vergleich zu SiC und zumindest oberflächlich - zu SiO₂ oxidierbar ist. Dadurch wird die Herstellung einer möglichst gleichmäßigen und geschlossenen SiO₂-Schutzschicht bei vergleichsweise kurzer Oxidationsdauer erleichtert.

Die SiO₂-Schutzschicht wird vorzugsweise dadurch erzeugt, dass die Behandlung des Trägers in sauerstoffhaltiger Atmosphäre entweder ein Glühen in einem Ofen oder ein Erhitzen des Trägers mittels einer sauerstoffhaltigen oder wasserhaltigen Brennerflamme bei einer Temperatur von mindestens 1000 °C, vorzugsweise bei einer Temperatur von mindestens 1200 °C, umfasst.

Bei einer geringeren Temperatur als 1000 °C erfordert die Umwandlung von SiC in eine mindestens 0,1 µm dicke SiO₂-Schutzschicht eine unwirtschaftlich lange Zeit. Andererseits sind insbesondere bei SiC-Schichten aus SiSiC Behandlungstemperaturen von mehr als etwa 1440 °C nicht bevorzugt, da dabei das metallische Silicium schmilzt.

Es hat sich bewährt, wenn eine SiO₂-Schutzschicht mit einer Dicke im Bereich von 1 bis 10 µm erzeugt wird.

Eine relativ dünne Schutzschicht genügt den Anforderungen an Schutz vor Kontamination und Abrasion und sie ermöglicht wegen des geringen korrosiven Verschleißes der SiC-Schicht einen Mehrfacheinsatz des Trägers, ohne dass sich eine wesentliche Verschlechterungen der Oberflächenbeschaffenheit einstellen. Die Erzeugung von Schichtdicken von mehr als 10 µm erfordert sehr lange Behandlungsdauern, da das sich bildende SiO₂ auch gegenüber der weiteren Oxidation als Schutzschicht wirkt. Diese langen Behandlungsdauern sind nicht durch ein merkliches Plus in Bezug auf die Wirksamkeit der SiO₂-Schutzschicht gerechtfertigt. Außerdem wird durch dicke SiO₂-Schutzschichten die Entfernbarkeit des Trägers erschwert.

Es wird eine Verfahrensweise bevorzugt, bei der eine Cristobalit enthaltende die SiO₂-Schutzschicht erzeugt wird.

Schutzschichten, die vollständig oder überwiegend aus Cristobalit bestehen, zeigen eine hohe mechanische und thermische Beständigkeit. Sie wirken außerdem einer Schmelzverbindung mit dem Sootkörper entgegen und tragen so zu einer einfacheren Entnahme des Trägers bei. Infolge der zur Erzeugung der SiO₂-Schutzschicht erforderlichen hohen Behandlungstemperaturen und/oder langen Behandlungsdauern und aufgrund verkehrsüblicher Alkali-oder Erdalkali-Verunreinigungen auf der Oberfläche der SiC-Schicht bilden sich in der Regel Schutzschichten, die vollständig oder überwiegend aus Cristobalit bestehen, wenn keine besonderen Vorkehrungen zur Reinigung des Trägers getroffen werden.

Auch bei dickeren, überwiegend aus Cristobalit bestehenden Schutzschichten sind die der SiC-Oberfläche benachbarten Schichtbereiche in der Regel kristallin und in Richtung der freien Oberfläche zunehmend von Nestern aus amorphem SiO₂ durchsetzt, so dass sich die entsprechenden SiO₂-Phasen gegenseitig durchdrungen.

Eine SiO₂-Schutzschicht zeigt sich als besonders stabil, wenn sie Schichtbereiche aus amorphem SiO₂ aufweist.

Die Schichtbereiche aus amorphem SiO₂ bilden im Idealfall eine geschlossene Lage, die sich durch Dichtheit gegenüber Gasen auszeichnet und übermäßige Korrosionsprozesse am Träger verhindert, die insbesondere durch reaktive Gase wie H₂O und HCl ablaufen können; gleichzeitig reduziert sie die Eindiffusion von Verunreinigungen vom Inneren des Trägers in den Sootkörper, und sie minimiert die Gefahr eines Eintrags von Verunreinigungen durch Abrasion.

Hinsichtlich des Trägers wird die oben angegebene Aufgabe ausgehend von einem Träger der eingangs genannten Gattung erfindungsgemäß dadurch gelöst, dass die SiC-Schicht mit einer durch Oxidation der SiC-Schicht erzeugten SiO₂-Schutzschicht mit einer Dicke von mindestens 0,1 µm versehen ist.

Der Träger besteht vollständig oder mindestens im Bereich seiner äußeren Zylindermantelfläche aus SiC. Bei der erfindungsgemäßen Modifikation des gattungsgemäßen SiC-Trägers ist die SiC-Oberfläche mit einer Schutzschicht aus SiO₂ mit einer Dicke von mindestens 0,1 µm überzogen, die im Idealfall geschlossen ist und die SiC-Oberfläche vollständig bedeckt.

Der Träger weist somit eine Zylindermantelfläche auf, die arteigen in Bezug auf das darauf abzuscheidende SiO₂-Sootrohr ist, und die einen Eintrag von Verunreinigungen in das Sootrohr verhindert oder vermindert.

Die SiO₂-Schutzschicht entfaltet außerdem eine Schutzwirkung in Bezug auf Abrasion und Korrosion des SiC-Trägermaterials durch die Ofenatmosphäre und die abgeschiedene Sootschicht. Besonders vorteilhaft dabei ist, dass auch durch Abrasion oder Korrosion erzeugter Abrieb aus arteigenem Material in Bezug auf den SiO₂-Sootkörper besteht und somit dessen Kontaminationsrisiko verringert.

SiC ist thermisch und mechanisch stabil und auch bei geringen Wandstärken zur Halterung eines schweren, großvolumigen Sootkörpers geeignet. Außerdem tragen eine hohe Bruchfestigkeit und eine gute Temperaturwechselbeständigkeit zur Betriebssicherheit bei. Die SiC-Schicht ist als Stab, Rohr oder Beschichtung eines Stabes oder Rohres ausgebildet. Stab oder Rohr bestehen aus einem Teil oder sie sind aus mehreren Segmenten oder Teilstücken zusammengesetzt.

Die SiO₂-Schutzschicht wird vorzugsweise durch eine Behandlung des Trägers in sauerstoffhaltiger Atmosphäre erzeugt, die entweder ein Glühen in einem Ofen oder ein Erhitzen des Trägers mittels einer sauerstoffhaltigen oder wasserhaltigen Brennerflamme bei einer Temperatur von mindestens 1000°C, vorzugsweise bei einer Temperatur von mindestens 1200°C, umfasst, wie oben anhand des erfindungsgemäßen Verfahrens näher erläutert.

Vorteilhafte Ausgestaltungen des erfindungsgemäßen Trägers ergeben sich aus den Unteransprüchen. Soweit in den Unteransprüchen angegebene Ausgestaltungen des Trägers den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

### Ausführungsbeispiel

Nachfolgend wird die Erfindung anhand eines Ausführungsbeispiels und einer Zeichnung näher erläutert. Als einzige Figur der Zeichnung zeigt in schematischer Darstellung
**Figur 1** eine Vorrichtung zur Herstellung eines SiO₂-Sootkörpers im Rahmen der Durchführung des erfindungsgemäßen Verfahrens, und
**Figur 2** einen Träger gemäß der Erfindung in einer radialen Schnittdarstellung.

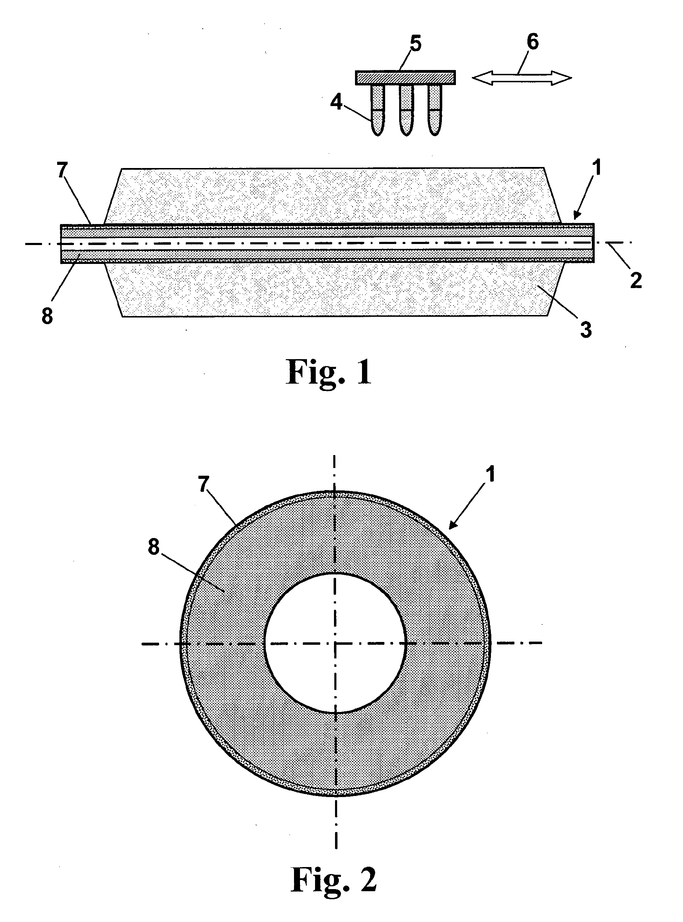

Die in **Figur 1** dargestellte Vorrichtung dient zur Herstellung eines SiO₂-Sootkörpers 3. Die Vorrichtung zeigt ein Trägerrohr 1 aus reaktionsgebundenem siliciuminfiltriertem Siliciumcarbid (SiSiC), das um seine Längsachse 2 rotiert. Mittels des OVD-Abscheideverfahrens werden auf der Zylindermantelfläche des Trägerrohres 1 sukzessive aufeinander folgende SiO₂-Sootschichten abgeschieden und so der poröse Sootkörper 3 gebildet. Zur Erzeugung der Sootschichten sind Abscheidebrenner 4 aus Quarzglas vorgesehen, die mit einem Abstand von jeweils 150 mm auf einem gemeinsamen Schlitten 5 montiert sind, der entlang des Trägerrohres 1 zwischen den Enden des sich bildenden Sootkörpers 3 reversierend bewegbar ist, wie dies der Richtungspfeil 6 andeutet, und der senkrecht dazu verschiebbar ist. Der Sootkörper-Abscheideprozess wird beendet, sobald der Sootkörper 3 einen Außendurchmesser von etwa 350 mm aufweist.

Das SiC-Trägerrohr 1 hat einen Außendurchmesser von 43 mm und einen Innendurchmesser von 26 mm. Vor Beginn des Abscheideprozesses wird es einer Behandlung zur Erzeugung einer SiO₂-Schutzschicht 7 unterzogen. Dazu wird das SiC-Trägerrohr 1 in einen Ofen eingebracht und in Luft während einer Dauer von 12 h bei einer Temperatur von 1200 °C behandelt. Dabei bildet sich auf allen Oberflächen des SiC-Trägerrohres 1 eine geschlossene SiO₂-Schicht, die im Bereich der SiC-Oberfläche in überwiegend kristalliner Form als Cristobalit vorliegt. Das so behandelte SiC-Trägerrohr 1 besteht somit aus einem Basiskörper 8 aus SiC, der allseitig von einer SiO₂-Schutzschicht mit einer Dicke von etwa 2 µm überzogen ist. Wichtig für das erfindungsgemäße Verfahren ist dabei insbesondere die SiO₂-Schutzschicht 7 auf der äußeren Zylindermantelfläche, die in Figur 1 dargestellt ist.

Aus der Schnittdarstellung des Trägerrohres 1 gemäß **Figur 2** ist erkennbar, dass die SiO₂-Schutzschicht 7 den Basiskörper 8 umschließt. Der Basiskörper 8 besteht aus SiSiC. Die SiO₂-Schutzschicht 7 verhindert einen Eintrag von Verunreinigungen aus dem Basiskörper 8, und sie schirmt diesen gleichzeitig gegenüber der umgebenden Atmosphäre und gegenüber abrasivem Angriff ab.

Die Darstellungen in den Figuren 1 und 2 sind nicht maßstabsgetreu; insbesondere ist die Dicke der SiO₂-Schutzschicht 7 im Sinne einer deutlicheren Darstellung übertrieben dick eingezeichnet.

Nachfolgend wird das erfindungsgemäße Verfahren anhand der in Figur 1 gezeigten Anordnung beispielhaft beschrieben:
Zur Herstellung des SiO₂-Sootkörpers 3 nach dem erfindungsgemäßen Verfahren werden den Abscheidebrennern 4 jeweils als Brennergase Sauerstoff und Wasserstoff zugeführt sowie als Einsatzmaterial für die Bildung der SiO₂-Partikel ein Gasstrom, der SiCl₄ enthält. Diese Komponenten werden in der jeweiligen Brennerflamme zu SiO₂-Partikeln umgesetzt und diese auf dem Trägerrohr 1 unter Bildung des porösen SiO₂-Sootkörpers 3 schichtweise abgeschieden. Der Schlitten 5 mit den Abscheidebrennern 4 wird dabei mit einer Translationsgeschwindigkeit von 800 mm/min entlang des sich bildenden Sootkörpers 3 zwischen dessen Enden hin- und herbewegt.

Nach Abschluss des Abscheideprozesses wird das Trägerrohr 1 entfernt. Es zeigt sich, dass die Innenoberfläche des so erhaltenen Rohres aus porösem SiO₂-Soot (Sootrohr) eben und sauber ist, so dass eine mechanische Nachbearbeitung nicht erforderlich ist. Auch die Oberfläche des Trägerrohres 1 weist keine visuell erkennbare Korrosion auf. Eine Überprüfung der Reinheit der Kontaktfläche zwischen Sootrohr und Trägerrohr 1 ergab wesentlich geringere Verunreinigungsgehalte als bei einer Kontaktfläche zu einem SiC-Trägerrohr ohne SiO₂-Schutzschicht.

Das Sootrohr wird anschließend in bekannter Weise durch Heißchlorierung getrocknet wird, indem es in einen Dehydratations-Ofen eingebracht und darin bei einer Temperatur um 900°C in einer chlorhaltigen Atmosphäre während einer Dauer von 8 h behandelt wird.

Das getrocknete Sootrohr wird anschließend in einen Vakuum-Verglasungsofen mit vertikal orientierter Längsachse eingebracht und mit seinem unteren Ende beginnend mit einer Zufuhrgeschwindigkeit von 10 mm/min kontinuierlich von oben einem ringförmigen Heizelement zugeführt und zonenweise erhitzt. Die Temperatur des Heizelements wird auf 1400°C voreingestellt. Beim Sintern wandert eine Schmelzfront innerhalb des Sootrohres von außen nach innen und gleichzeitig von oben nach unten. Der Innendruck innerhalb des Verglasungsofens wird beim Sintern durch fortlaufendes Evakuieren bei 0,1 mbar gehalten. Auf diese Weise wird ein großvolumiges Quarzglasrohr (Außendurchmesser: 150 mm) mit kleinem Innendurchmesser von 43 mm erhalten, das sich durch hohe Reinheit auszeichnet, die einen Einsatz im kernnahen Bereich einer Vorform für optische Fasern - zum Beispiel als Substratrohr für die Innenabscheidung mittels MCVD-Verfahren - ermöglicht. Das Quarzglasrohr ist beispielsweise auch zum Überfangen eines Kernstabs beim Faserziehen oder zur Herstellung einer Vorform geeignet.

## Patentansprüche

1. Verfahren zur Herstellung eines Quarzglaszylinders, indem durch Abschei-:
den von SiO₂-Partikeln auf einer Zylindermantelfläche eines um seine Längsachse rotierenden Trägers (1), der eine Schicht (8) aus Siliciumcarbid (SiC-Schicht) aufweist, ein poröses Sootrohr (3) hergestellt und das Sootrohr (3) zu dem Quarzglaszylinder gesintert wird, **dadurch gekennzeichnet,**
**dass** die SiC-Schicht (8) der Zylindermantelfläche vor dem Abscheiden der SiO₂-Partikel bei hoher Temperatur in einer sauerstoffhaltigen Atmosphären behandelt wird, derart, dass durch Oxidation eine SiO₂-Schutzschicht (7) mit einer Dicke von mindestens 0,1 µm erzeugt wird.

2. Verfahren nach Anspruch 1, **dadurch gekennzeichnet, dass** die SiC-Schicht (8) aus einem mit Silicium infiltrierten Siliciumcarbid (SiSiC) besteht.

3. Verfahren nach einem der vorhergehenden Ansprüche, **dadurch gekennzeichnet, dass** die Behandlung in sauerstoffhaltiger Atmosphäre ein Glühen des Trägers (1) in einem Ofen oder ein Erhitzen des Trägers mittels einer sauerstoffhaltigen oder wasserhaltigen Brennerflamme bei einer Temperatur von mindestens 1000 °C, vorzugsweise bei einer Temperatur von mindestens 1200 °C, umfasst.

4. Verfahren nach einem der vorhergehenden Ansprüche, **dadurch gekennzeichnet, dass** eine SiO₂-Schutzschicht (7) mit einer Dicke im Bereich von 1 bis 10 µm erzeugt wird.

5. Verfahren nach einem der vorhergehenden Ansprüche, **dadurch gekennzeichnet, dass** eine Cristobalit enthaltende SiO₂-Schutzschicht (7) erzeugt wird.

6. Verfahren nach Anspruch 5, **dadurch gekennzeichnet, dass** eine SiO₂-Schutzschicht (7) erzeugt wird, die Schichtbereiche aus amorphem SiO₂ aufweist.

7. Träger zur Durchführung des Verfahrens nach einem der Ansprüche 1 bis 6, der mindestens im Bereich seiner äußeren Zylindermantelfläche eine Schicht (8) aus Siliciumcarbid (SiC-Schicht) aufweist, die als Stab, Rohr oder Beschichtung eines Stabes oder Rohres ausgebildet ist, **dadurch gekennzeichnet, dass** die SiC-Schicht (8) mit einer durch Oxidation der SiC-Schicht erzeugten SiO₂-Schutzschicht (7) mit einer Dicke von mindestens 0,1 µm versehen ist.

8. Träger nach Anspruch 7, **dadurch gekennzeichnet, dass** die SiC-Schicht (8) aus einem mit Silicium infiltrierten Siliciumcarbid (SiSiC) besteht.

9. Träger nach einem der Ansprüche 7 oder 8, **dadurch gekennzeichnet, dass** die SiO₂-Schutzschicht (7) eine Dicke im Bereich von 1 bis 10 µm aufweist.

10. Träger nach einem der Ansprüche 7 bis 9, **dadurch gekennzeichnet, dass** die SiO₂-Schutzschicht (7) Cristobalit enthält.

## Claims

1. A method for producing a quartz glass cylinder in that a porous soot tube (3) is produced by depositing SiO₂ particles on a cylinder jacket surface of a support (1) which is rotating about its longitudinal axis and comprises a layer (8) of silicon carbide (SiC layer), and the soot tube (3) is sintered so as to form the quartz glass cylinder, **characterized in that** the SiC layer (8) on said cylinder jacket surface is treated prior to deposition of the SiO₂ particles at a high temperature in an oxygen-containing atmosphere such that a SiO₂ barrier layer (7) with a thickness of at least 0.1 µm is produced by oxidation.

2. The method according to claim 1, **characterized in that** the SiC layer (8) consists of a silicon infiltrated silicon carbide (SiSiC).

3. The method according to any one of the preceding claims, **characterized in that** the treatment in oxygen-containing atmosphere comprises annealing the support (1) in a furnace or heating the support by means of an oxygen- or hydrogen-containing burner flame at a temperature of at least 1000°C, preferably at a temperature of at least 1200°C.

4. The method according to any one of the preceding claims, **characterized in that** a SiO₂ barrier layer (7) is produced with a thickness in the range of 1 µm to 10 µm.

5. The method according to any one of the preceding claims, **characterized in that** a cristobalite-containing SiO₂ barrier layer (7) is produced.

6. The method according to claim 5, **characterized in that** a SiO₂ barrier layer (7) is produced that comprises layer portions of amorphous SiO₂.

7. A support for performing the method according to any one of claims 1 to 6, the support comprising at least in a region of its outer cylinder jacket surface a layer (8) of silicon carbide (SiC layer), which is configured as a rod, tube or coating of a rod or tube, **characterized in that** the SiC layer (8) is provided with a SiO₂ barrier layer (7) produced by oxidation and having a thickness of at least 0.1 µm

8. The support according to claim 7, **characterized in that** the SiC layer (8) consists of a silicon infiltrated silicon carbide (SiSiC).

9. The support according to any one of claims 7 or 8, **characterized in that** the SiO₂ barrier layer (7) has a thickness in the range of 1 µm to 10 µm.

10. The support according to any one of claims 7 to 9, **characterized in that** the SiO₂ barrier layer (7) contains cristobalite.

## Revendications

1. Procédé pour la fabrication d'un cylindre en verre de quartz, en fabricant un tube poreux de suie par précipitation de particules SiO₂ sur une surface enveloppante cylindrique d'un support (1) rotatif autour de son axe longitudinal, qui présente une couche (8) en carbure de silicium (couche SiC), et en frittant le tube de suie (3) pour obtenir un cylindre de verre de quartz, **caractérisé en ce que** la couche de SiC (8) de la surface d'enveloppe cylindrique est traitée avant la précipitation des particules de SiO₂ à haute température dans une atmosphère contenant de l'oxygène de manière à produire par oxydation une couche de protection SiO₂ (7) avec une épaisseur d'au moins 0,1 µm.

2. Procédé selon la revendication 1, **caractérisé en ce que** la couche SiC (8) se compose d'un carbure de silicium (SiSiC) infiltrée de silicium.

3. Procédé selon l'une des revendications précédentes, **caractérisé en ce que** le traitement dans une atmosphère contenant de l'oxygène comprend un recuit du support (1) dans un four ou un échauffement du support au moyen d'une flamme de brûleur contenant de l'oxygène ou de l'hydrogène à une température d'au moins 1000°C, de préférence à une température d'au moins 1200°C.

4. Procédé selon l'une des revendications précédentes, **caractérisé en ce qu'**une couche de protection SiO₂ (7) est générée avec une épaisseur comprise entre 1 µm et 10 µm.

5. Procédé selon l'une des revendications précédentes, **caractérisé en ce qu'**une couche de protection de SiO₂ (7) contenant de la cristobalite est générée.

6. Procédé selon la revendication 5, **caractérisé en ce qu'**une couche de protection SiO₂ (7) est générée qui présente des zones de couche en SiO₂ amorphe.

7. Support pour la mise en oeuvre du procédé selon l'une des revendications 1 à 6, qui présente au moins dans la zone de sa surface d'enveloppe cylindrique une couche (8) en carbure de silicium (couche SiC) qui est réalisée en tant que barre, tube ou revêtement d'une barre ou d'un tube, **caractérisé en ce que** la couche SiC (8) est munie d'une couche de protection de SiO₂ générée par oxydation de la couche SiC (8) d'une épaisseur d'au moins 0,1 µm.

8. Support selon la revendication 7, **caractérisé en ce que** la couche de SiC (8) se compose d'un carbure de silicium infiltré de silicium (SiSiC).

9. Support selon l'une des revendications 7 ou 8, **caractérisé en ce que** la couche de protection SiO² (7) présente une épaisseur comprise entre 1 µm et 10 µm.

10. Support selon l'une des revendications 7 ou 8, **caractérisé en ce que** la couche de protection SiO₂ (7) contient de la cristobalite.
